# DEMANDE DE BREVET EUROPEEN

(11) **EP 4 053 803 A1**
(43) Date de publication de la demande: **07.09.2022**
(21) Numéro de dépôt: 22160098.4
(22) Date de dépôt: 03.03.2022
(51) Int. Cl.: G06V 20/52, G06V 10/145, G06V 40/10

(54) **PROCEDE ET SYSTEME DE DETECTION DE PERSONNE DANS UN LIEU, ET VEHICULE METTANT EN OEUVRE UN TEL SYSTEME**

(30) Priorité: 04.03.2021 FR 2102126
(71) Demandeur: SNCF Voyageurs, 93200 Saint-Denis (FR)
(72) Inventeur: AFANOU, Sitou, 72000 LE MANS (FR); MARTEAU, Tony, 72100 LE MANS (FR)
(74) Mandataire: IPAZ

(57) **Abrégé**

L'invention concerne un procédé (100) de détection de personne dans un lieu comprenant au moins une surface, dite perturbatrice, susceptible de fausser ladite détection et causer un faux-positif lors de ladite détection, ledit procédé (100) comprenant au moins une itération d'une phase (102), dite de détection, comprenant les étapes suivantes :
- captation (106) d'au moins une image au sein dudit lieu par au moins une caméra,
- pour au moins une image captée, analyse (108) de ladite image pour déterminer la présence ou non d'une personne dans ladite image ;
caractérisé en ce que ladite phase de détection (102) comprend en outre, préalablement à l'étape de captation (106), une étape de projection (104), par au moins un projecteur, sur au moins une desdites surfaces perturbatrices, d'un motif adversarial empêchant la détection d'une personne au niveau de ladite surface perturbatrice.

Elle concerne également un système de détection de personne dans un lieu comprenant au moins une surface et un véhicule de transport en commun équipé dudit système.

## Description

**Titre de l'invention** : Procédé et système de détection de personne dans un lieu, et véhicule mettant en œuvre un tel système.

La présente invention concerne un procédé de détection de personne dans un lieu. Elle concerne également un système de détection de personne dans un lieu, et un véhicule de transport en commun équipé d'un tel système de détection.

Le domaine de l'invention est le domaine de la détection de personne dans un lieu, en particulier dans un lieu fermé, et encore plus particulièrement dans un habitacle ou une zone passager d'un véhicule, par exemple dans un véhicule de transport en commun tel qu'un train.

### État de la technique

On connait de nombreux moyens de détection de présence de personne dans un lieu, public ou privé.

Pour détecter des personnes dans un lieu, il est connu d'utiliser des systèmes intelligents d'analyse d'images captées au sein dudit lieu.

Cependant, ces systèmes intelligents d'analyse d'images ne sont pas dénués de limitations. En effet, les performances de détection de personne par des systèmes intelligents sont limitées par la qualité et le contenu des images à analyser.

De plus, les systèmes intelligents d'analyse d'images actuels ne sont pas capables d'interpréter et de différencier dans une image une personne dans le lieu d'une personne hors du lieu, par exemple visible au travers d'une fenêtre.

De plus, les systèmes actuels sont aussi incapables de différencier une personne réelle d'une personne illustrée ou affichée sur un support publicitaire.

Ainsi les systèmes actuels sont enclins à générer de nombreux faux positifs.

Un but de la présente invention est de remédier à au moins un des inconvénients précités.

Un autre but de la présente invention est de proposer une solution plus fiable de détection de personnes dans un lieu.

### Exposé de l'invention

L'invention permet d'atteindre au moins l'un de ces buts par un procédé de détection de personne dans un lieu comprenant au moins une surface, dite perturbatrice, susceptible de fausser ladite détection et de causer un faux-positif lors de ladite détection, ledit procédé comprenant au moins une itération d'une phase, dite de détection, comprenant les étapes suivantes :
- captation d'au moins une image au sein dudit lieu par au moins une caméra,
- pour au moins une image captée, analyse de ladite image pour déterminer la présence ou non d'une personne dans ladite image ;
caractérisé en ce que ladite phase de détection comprend en outre, préalablement à l'étape de captation, une étape de projection, par au moins un projecteur, sur au moins une desdites surfaces perturbatrices, un motif adversarial empêchant la détection d'une personne au niveau de ladite surface perturbatrice.

L'invention propose ainsi de projeter un motif adversarial sur une surface perturbatrice d'un lieu de sorte que ledit motif adversarial est présent dans une image captée comprenant ladite surface perturbatrice et captée au sein dudit lieu. Ainsi, lorsque ladite image captée est analysée lors de l'étape d'analyse, le motif adversarial empêche la détection d'une personne au niveau de ladite surface perturbatrice. Par conséquent, le procédé de détection selon l'invention est plus fiable et moins enclin à générer des faux-positifs à cause de surfaces perturbatrices telles que des fenêtres, des miroirs ou des supports publicitaires se trouvant au sein du lieu.

A titre d'exemples nullement limitatifs, une surface perturbatrice susceptible de fausser la détection par un faux positif peut être :
- une surface translucide, tel qu'une fenêtre ou une porte,
- une surface transparente, tel qu'une fenêtre ou une porte,
- une surface réfléchissante, tel qu'un miroir,
- une surface publicitaire, tel qu'un écran ou une affiche,
- etc.

Avantageusement, l'étape de projection d'un motif adversarial sur une surface perturbatrice peut être réalisée en fonction d'au moins une donnée d'état relative audit lieu.

Ainsi, la mise en œuvre de l'étape de projection peut être contrôlée de sorte à n'effectuer la projection de motif adversarial que dans des conditions spécifiques, tel qu'une configuration spécifique ou un moment identifié comme important. Par conséquent, le procédé est plus économe en ressources et permet d'augmenter la durée de vie du projecteur.

Au moins une donnée d'état relative au lieu peut être captée par un capteur disposé dans ou à proximité dudit lieu. La donnée d'état peut ensuite être transmise à un système mettant en œuvre la présente invention et sous la forme d'au moins un signal, analogique ou digital.

A titre d'exemples nullement limitatifs une donnée d'état relative au lieu peut être, ou comprendre :
- une donnée horaire, tel qu'une heure de fermeture ou d'ouverture dudit lieu,
- une donnée relative à une alarme équipant ledit lieu, en particulier une donnée signalant que l'alarme est active,
- une donnée relative à l'état verrouillé ou non d'au moins un, en particulier chaque, accès audit lieu lorsque celui-ci est un espace clos, tel qu'une grille ou un porte,
- une donnée relative à un état d'activation ou non d'un capteur présent dans ledit lieu, tel qu'un capteur de mouvement ou un capteur audio,
- etc.

Plus particulièrement, lorsque le lieu est un habitacle ou une zone passager d'un véhicule, au moins une donnée d'état, peut comprendre :
- une position géographique dudit véhicule, et/ou
- un état ouvert ou fermé d'un ouvrant dudit habitacle ou de ladite zone passager.

Ainsi, il est possible, lorsque le lieu est un habitacle d'un véhicule, de contrôler la mise en œuvre de l'étape de projection de sorte à n'effectuer la projection de motif adversarial que dans des conditions spécifiques, tel qu'une configuration spécifique ou un moment identifié comme important en fonction de donnée d'état propre à un véhicule.

Il est par exemple possible de mettre en œuvre l'étape de projection lorsque le véhicule atteint une certaine position géographique, tel qu'une position correspondant au dernier arrêt d'une ligne de transport en commun ou correspondant au la position d'un parking où ledit véhicule est garé entre deux services.

Il est en outre possible de mettre en œuvre l'étape de projection lorsque qu'un ouvrant, tel qu'une porte, portière ou fenêtre, de l'habitacle du véhicule est ouvert ou fermé.

A titre d'autres exemples nullement limitatifs une donnée d'état relative à un habitacle d'un véhicule peut en outre être ou comprendre :
- une donnée relative à un état d'un moteur du véhicule,
- une donnée relative à une vitesse du véhicule,
- etc...

Avantageusement, le procédé selon l'invention peut comprendre en outre une phase, dite de calibration, préalablement à la première itération de la phase de détection, pour identifier au moins une surface perturbatrice.

Ainsi, il est possible d'identifier les différentes surfaces perturbatrices pouvant être présentes dans des images captées au sein dudit lieu avant de mettre en œuvre la phase de détection du procédé selon l'invention. Par conséquent, le procédé selon l'invention est plus efficace et permet une détection plus précise.

En particulier la phase de calibration peut comprendre au moins une itération des étapes suivantes :
- captation d'au moins une image du lieu, par au moins une caméra, et
- identification d'au moins une surface perturbatrice dans ladite au moins une image.

Cette identification lors de la phase de calibration peut par exemple être réalisée manuellement. Ainsi, une personne peut par exemple renseigner, au moins une surface perturbatrice présente en l'identifiant dans au moins une image captée au sein dudit lieu lors de la phase de calibration ou en amont de la phase de calibration.

Il est par exemple possible de renseigner une surface perturbatrice en identifiant un point correspondant au centre de ladite surface. Alternativement ou en plus, il est possible de renseigner une surface perturbatrice en identifiant le contour de ladite surface.

Ainsi, une calibration manuelle permet d'identifier de manière précise la position de différentes surfaces perturbatrices.

Alternativement ou en plus, lors de la phase de calibration, l'identification d'au moins une en particulier de chaque surface perturbatrice peut être réalisée de manière automatique.

Par exemple, une identification automatisée peut être réalisée en réalisant une détection de personne dans une image, dite vierge, du lieu prise lorsque ledit lieu ne comporte aucune personne. Toute personne détectée dans ladite image vierge sera *a fortiori* un faux-positif. Par conséquent, la surface au niveau de laquelle une personne a été détectée dans ladite image vierge, est une surface perturbatrice.

Ce mode de réalisation ne nécessite pas d'intervention manuelle. Ainsi, la mise en œuvre de la phase de calibration est facilité. Ce qui représente un avantage certain lorsque la phase de calibration doit être réitérée à chaque fois que l'environnement au sein du lieu change, par exemple à chaque fois que le contenu illustré ou affiché sur un support publicitaire est changé.

Avantageusement, la phase de calibration, peut en outre comprendre une étape de calibration de la projection d'un motif adversarial.

Ainsi, il est possible de calibrer la projection de sorte que la taille et/ou la forme d'un motif adversarial projeté soit adaptée à la surface perturbatrice en vue d'empêcher un faux positif.

En particulier, l'étape de calibration de la projection d'un motif adversarial peut comprendre au moins une itération des étapes suivantes :
- projection d'un motif adversarial sur une surface perturbatrice identifiée,
- captation d'au moins une image comprenant ladite surface perturbatrice et ledit motif adversarial,
- analyse de ladite image pour déterminer la présence ou non d'une personne dans ladite image, et
- lorsque la présence d'une personne est détectée au niveau de ladite surface perturbatrice, modification de la taille et/ou de la forme du motif adversarial.

La modification de la taille et/ou de la forme du motif adversarial peut par exemple être réalisée de manière automatique, par exemple en augmentant progressivement la taille du motif adversarial projeté.

Alternativement, la modification souhaitée de la taille et/ou de la forme du motif adversarial peut être renseignée de manière manuelle.

Avantageusement, l'étape d'analyse d'au moins une image captée peut être mise en œuvre par un réseau neuronal préalablement entrainé pour la détection de personne, en particulier dans ledit lieu.

Ainsi, il est possible d'améliorer davantage la qualité de détection de personne au sein dudit lieu, en particulier lorsque le réseau neuronal est entrainé spécifiquement à partir d'images captées au sein dudit lieu.

L'entrainement du réseau neuronal peut être réalisé par fourniture audit réseau neuronal d'une pluralité d'images dudit lieu et en indiquant si, et où, se trouve une personne le cas échéant.

Selon un mode de réalisation, au moins une image captée peut être une image dans le spectre visible.

Ainsi, le procédé selon l'invention peut être mis en œuvre facilement, en utilisant des caméras conventionnelles tel que par exemples des caméras de vidéosurveillance équipant déjà des lieux. Ainsi, le procédé selon l'invention est plus facile et moins onéreux à mettre en œuvre.

Alternativement ou en plus, au moins une image captée peut être une image dans le spectre non visible, en particulier dans le spectre infrarouge ou dans le spectre de l'ultraviolet.

Ainsi, il est possible d'utiliser des images captées dans le spectre non visible pour identifier la présence ou non de personne dans ledit lieu. Cela permet par d'améliorer la détection de personne par le procédé. Ceci est en particulier vrai lorsqu'au moins une image est captée dans le spectre du non visible et au moins une autre image est captée dans le spectre du visible sont utilisées conjointement pour effectuer la détection.

Avantageusement, au moins un motif adversarial projeté sur une surface perturbatrice peut être un motif dans le spectre visible, et l'image captée comprenant ladite surface perturbatrice peut être une image du spectre du visible.

Ainsi, le procédé selon l'invention peut améliorer la détection de la présence ou non de personne au sein d'un lieu à l'aide d'un motif adversarial projeté dans le spectre visible et pouvant être capté en utilisant des caméras conventionnelles tel que par exemple des caméras de vidéosurveillance équipant déjà des lieux.

De façon préférée, au moins un motif adversarial projeté sur une surface perturbatrice peut être un motif dans le spectre du non visible, et l'image captée comprenant ladite surface perturbatrice peut être une image du spectre du non visible.

Ainsi, le procédé peut être mis en œuvre lorsque des personnes sont présentes dans ledit lieu et ce sans que ledit motif adversarial projeté soit perçu par lesdites personnes. De plus, comme il ne peut être perçu, il ne peut pas attirer l'attention ni entrainer une gêne d'une personne présente dans le lieu.

Avantageusement, au moins un motif adversarial projeté sur une surface perturbatrice peut recouvrir uniquement une partie de ladite surface perturbatrice, et en particulier une zone centrale de ladite surface perturbatrice.

Ainsi, le motif adversarial projeté peut être dimensionné de sorte à réduire l'efficacité de détection au niveau de la surface perturbatrice sur laquelle il est projeté sans impacter la qualité de détection de zones proches de ladite surface perturbatrice.

En effet, en fonction du type d'analyse mise en œuvre pour effectuer la détection de personne, un motif adversarial peut perturber une zone plus large que la surface perturbatrice qu'il recouvre. Par conséquent, il est possible d'améliorer la qualité de détection de personne du procédé selon l'invention en ne recouvrant uniquement qu'une partie d'une zone perturbatrice.

Alternativement ou en plus, au moins un motif adversarial projeté sur une surface perturbatrice peut recouvrir intégralement ladite surface perturbatrice.

Dans ce cas, ledit motif adversarial permet d'étanchéiser intégralement la surface perturbatrice, celle-ci n'étant plus visible sur l'image captée et entièrement recouverte par le motif adversarial. Ainsi, il est possible de réduire au maximum les risques de faux-positif liés à la présence de ladite surface perturbatrice.

Alternativement, le motif adversarial projeté peut être configuré pour toujours recouvrir une même superficie et/ou toujours avoir une même forme, quelle que soit la taille de la surface perturbatrice sur laquelle il est projeté. A titre d'exemple nullement limitatif, le motif adversarial projeté peut être configuré pour recouvrir un carré de 10 cm sur 10 cm au niveau de la surface perturbatrice sur laquelle il est projeté.

Selon un autre aspect de l'invention, il est proposé un système de détection de personne dans un lieu comprenant au moins une surface, dite perturbatrice, susceptible de fausser ladite détection et de causer un faux-positif lors de ladite détection, ledit système comprenant :
- au moins une caméra pour capter au moins une image au sein dudit lieu ;
- au moins une unité d'analyse pour analyser au moins une image captée par ladite caméra pour déterminer la présence ou non d'une personne dans ladite image ;
caractérisé en ce qu'il comprend en outre au moins un projecteur prévu pour projeter, sur au moins une desdites surfaces perturbatrices, un motif adversarial empêchant la détection d'une personne au niveau de ladite surface perturbatrice.

Ainsi, le système de détection de personne dans un lieu comprenant au moins une surface perturbatrice est configuré pour mettre en œuvre chacune des étapes d'un procédé selon l'invention décrite précédemment.

A titre de d'exemples nullement limitatifs, au moins un projecteur du système de détection peut être :
- un projecteur laser,
- un vidéo projecteur,
- un rétroprojecteur,
- un pico projecteur,
- un projecteur ultra courte focale,
- etc.

Le système de détection de personne selon l'invention peut comprendre un projecteur configuré pour projeter au moins un motif adversarial sur plusieurs surfaces perturbatrices, soit simultanément, soit à tour de rôle.

Alternativement, chaque projecteur du système peut être dédié à une unique surface perturbatrice.

Suivant des exemples de réalisation, l'unité d'analyse peut être un ordinateur, un serveur, un processeur et plus généralement un moyen de calcul.

Avantageusement, le système peut être calibré de sorte à identifier au moins une, en particulier chaque, surface perturbatrice, tel que décrit plus haut en relation avec le procédé selon l'invention.

Avantageusement, au moins une unité d'analyse peut comprendre un réseau neuronal préalablement entrainé pour la détection de personnes, en particulier à l'aide d'images captées dans ledit lieu.

Plus particulièrement, ledit réseau neuronal peut mettre en œuvre au moins un algorithme profond parmi YOLO, RCNN, Faster RCNN, Mask RCNN et VGG, pour lequel, lors d'une phase d'apprentissage, on donne en données d'entrée des images accompagnées de données précisant si une personne est présente ou non dans chacune desdites images.

Ainsi, un fois le réseau neuronal entrainé, lorsqu'une image est donnée en entrée, le réseau neuronal est capable de fournir en sortie une donnée indiquant si une personne a été détectée ou non dans ladite image.

Selon un autre aspect de l'invention, il est proposé un véhicule de transport en commun, en particulier véhicule ferroviaire, équipé d'un système selon l'invention pour la détection de personne dans une zone passager ou un habitacle dudit véhicule.

Avantageusement, un véhicule peut être :
- un wagon, équipé d'un système selon l'invention pour la détection de personne à l'intérieur dudit le wagon,
- une locomotive, équipée d'un système selon l'invention pour la détection de personne à l'intérieur d'une zone conducteur,
- un train,
- un tramway,
- etc.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un procédé selon l'invention ;
- la FIGURE 2 est une représentation schématique d'un autre exemple de réalisation non limitatif d'un procédé selon l'invention ;
- la FIGURE 3 est une représentation schématique d'un exemple de réalisation non limitatif d'un système selon l'invention ;
- la FIGURE 4a et la FIGURE 4b sont des représentations schématiques et partielles d'un exemple non limitatif de lieu équipé d'un système selon l'invention ; et
- la FIGURE 5 est une représentation schématique d'un exemple de réalisation non limitatif d'un véhicule selon l'invention équipé d'un système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

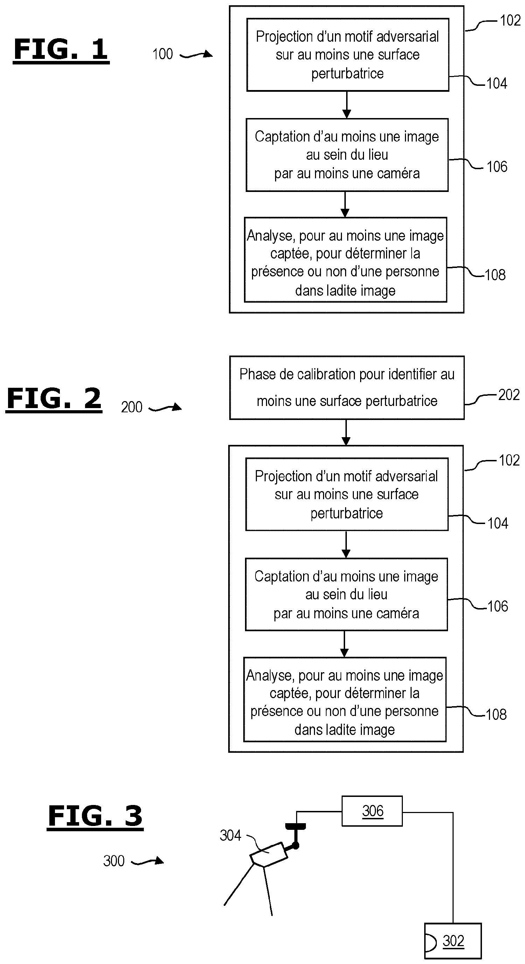

La FIGURE 1 est une représentation schématique d'un exemple de réalisation non limitatif d'un procédé selon l'invention.

Le procédé 100 illustré en FIGURE 1 est un procédé de détection de personne dans un lieu comprenant au moins une surface, dite perturbatrice, susceptible de fausser ladite détection et causer un faux-positif lors de ladite détection. Une surface perturbatrice peut par exemple être une surface translucide ou transparente tel qu'une fenêtre ou une porte, une surface réfléchissante, tel qu'un miroir ou une surface publicitaire, tel qu'un écran ou une affiche.

Le procédé 100 de détection de personne comprend au moins une itération d'une phase 102, dite de détection.

La phase 102 de détection comprend une étape 104 de projection, par au moins un projecteur sur au moins une desdits surfaces perturbatrices, d'un motif adversarial empêchant la détection d'une personne au niveau de ladite surface perturbatrice.

Cette étape 104 de projection peut être réalisée en fonction d'au moins une donnée d'état relative audit lieu, tel que par exemple une donnée horaire, ou lorsque le lieu est un habitacle d'un véhicule la position géographique dudit véhicule ou un état ouvert ou fermée d'un ouvrant tel qu'un porte dudit véhicule.

Le motif adversarial projeté peut par exemple être prédéfini ou généré aléatoirement. De préférence, la taille et la position du motif adversarial projeté est adaptée à la surface perturbatrice sur laquelle il est projeté.

La phase 102 de détection comprend, après l'étape 104 de projection, une étape 106 de captation d'au moins une image au sein dudit lieu par au moins une caméra. Ainsi, une image captée comprenant ladite surface perturbatrice comprend en outre au niveau de ladite surface perturbatrice ledit motif adversarial projeté.

La phase 102 de détection comprend en outre, après l'étape 106 de captation, une étape d'analyse 108, d'au moins une image captée lors de l'étape 106 de captation, pour déterminer la présence ou non d'une personne dans ladite image. Ainsi, lorsque l'image captée est analysée lors de cette étape d'analyse 108, le motif adversarial empêche la détection d'une personne au niveau de ladite surface perturbatrice. Pour cette raison, le procédé 100 de détection est moins enclin à générer des faux-positifs à cause de surfaces perturbatrices telles que des fenêtres, des miroirs ou des supports publicitaires se trouvant au sein du lieu.

La FIGURE 2 est une représentation schématique d'un autre exemple de réalisation non limitatif d'un procédé selon l'invention.

Le procédé 200 illustré en FIGURE 2 comprend l'intégralité des étapes du procédé 100 décrit en relation avec la FIGURE 1.

Le procédé 200 comprenant en outre, préalablement à la première itération de la phase 102 de détection, une phase 202 de calibration pour identifier au moins une surface perturbatrice.

En particulier, la phase 202 de calibration peut comprendre au moins une itération des étapes suivantes :
- captation d'au moins une image du lieu, par au moins une caméra, et
- identification d'au moins une surface perturbatrice dans ladite au moins une image.

Cette identification lors de la phase de calibration 202 peut par exemple être réalisée manuellement. Ainsi, une personne peut par exemple renseigner, au moins une surface perturbatrice présente en l'identifiant dans au moins une image captée au sein dudit lieu lors de la phase de calibration 202 ou en amont de la phase de calibration 202.

Il est par exemple possible de renseigner une surface perturbatrice en identifiant un point correspondant au centre de ladite surface. Alternativement ou en plus, il est possible de renseigner une surface perturbatrice en identifiant le contour de ladite surface.

Ainsi, une calibration manuelle permet d'identifier de manière précise la position de différentes surfaces perturbatrices.

Alternativement ou en plus, lors de la phase 202 de calibration, l'identification d'au moins une en particulier de chaque surface perturbatrice peut être réalisée de manière automatique.

Par exemple, une identification automatisée peut être réalisée en réalisant une détection de personne dans une image, dite vierge, du lieu prise lorsque ledit lieu ne comporte aucune personne. Toute personne détectée dans ladite image vierge sera *a fortiori* un faux-positif. Par conséquent, la surface au niveau de laquelle une personne a été détectée dans ladite image vierge, est une surface perturbatrice.

Ce mode de réalisation ne nécessite pas d'intervention manuelle. Ainsi, la mise en œuvre de la phase 202 de calibration est facilitée. Ce qui représente un avantage certain lorsque la phase 202 de calibration doit être réitérée à chaque fois que l'environnement au sein du lieu change, par exemple à chaque fois que le contenu illustré ou affiché sur un support publicitaire est changé.

La FIGURE 3 est une représentation schématique d'un exemple de réalisation non limitatif d'un système selon l'invention.

Le système 300 de détection de personne est prévu pour pouvoir mettre en œuvre le procédé 100 ou le procédé 200 décrit plus haut et de manière générale tout procédé selon l'invention.

L'exemple illustré en FIGURE 3 de système 300 de détection de personne pour un lieu comprenant au moins une surface perturbatrice comprend :
- un projecteur 302 prévu pour projeter, sur une desdites surfaces perturbatrices, un motif adversarial empêchant la détection d'une personne au niveau de ladite surface perturbatrice,
- une caméra 304 pour capter au moins une image au sein dudit lieu, et
- une unité d'analyse 306 pour analyser au moins une image captée par ladite caméra pour déterminer la présence ou non d'une personne dans ladite image.

Le projecteur 302 peut être prévu pour projeter un motif adversarial dans le spectre du visible. Dans ce cas, la caméra 304 est prévue pour capter une image au sein dudit lieu dans le spectre du visible.

Alternativement ou en plus, un système selon l'invention peut comprendre un projecteur prévu pour projeter un motif adversarial dans le spectre du non-visible. Dans ce cas, le système comprend de préférence une caméra prévue pour capter une image au sein dudit lieu dans le spectre du non-visible.

Dans l'exemple illustré l'unité d'analyse 306 est reliée au projecteur 302 et à la caméra 304. Toutefois, cela n'est pas obligatoirement le cas, l'unité d'analyse peut par exemple être sur un serveur distant.

Dans l'exemple illustré, le système 300 comprend un unique projecteur 302 et une unique caméra 304, bien évidemment un système de détection selon l'invention peut comprendre un plus grand nombre de projecteur 302 et/ou de caméra 304.

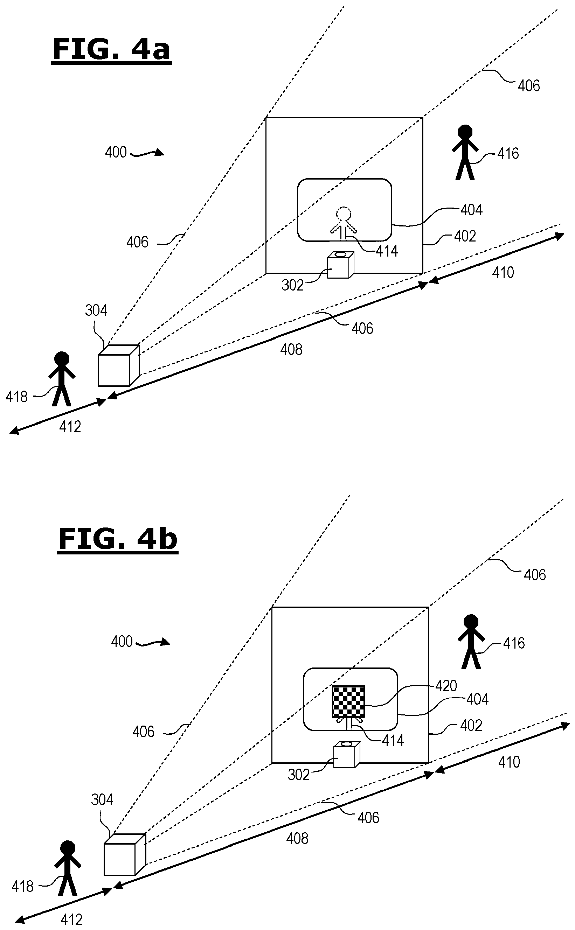

La FIGURE 4a et la FIGURE 4b sont des représentations schématiques et partielles d'un exemple non limitatif de lieu équipé d'un système selon l'invention.

La FIGURE 4a et la FIGURE 4b représentent chacune, partiellement et en perspective, un même lieu 400.

Le lieu 400 comprend un mur 402, ou une paroi, au niveau duquel est situé une surface perturbatrice 404. Le lieu 400 est équipé d'un système selon l'invention comprenant un projecteur 302 disposé au pied du mur 402 et une caméra 304 en vis-à-vis du mur 402. L'unité d'analyse n'est pas illustrée en FIGURE 4a et la FIGURE 4b.

Le champ de vision théorique de ladite caméra 304 est illustré par quatre lignes en 406 ayant pour origine la caméra 304.

Dans l'exemple illustré dans les FIGURE 4a et la FIGURE 4b le lieu 400 est défini comme comprenant l'espace 408 compris entre le mur 402 et la caméra 304. Ainsi, l'espace 410 situé au-delà du mur 402 est considéré comme extérieur audit lieu 400. De même, l'espace 412 situé derrière la caméra 304 est lui aussi considéré comme extérieur audit lieu 400.

Dans l'exemple illustré en FIGURE 4a, une image captée par la caméra 304, dans laquelle la surface perturbatrice 404 est présente, peut comprendre au niveau de celle-ci une silhouette 414 à apparence humaine pouvant fausser la détection de personne et causer un faux-positif.

Cette silhouette 414 peut par exemple être présente dans ladite image captée si la surface perturbatrice 404 est :
- une surface publicitaire, tel qu'un écran ou une affiche, auquel cas la caméra 304 peut capter la silhouette 404 illustrée en photo par exemple au niveau de la surface publicitaire,
- une surface transparente ou translucide, telle qu'une fenêtre, auquel cas la caméra 304 peut capter au niveau de la surface transparente ou translucide la silhouette 404 d'une personne 416 située à l'extérieur du lieu 400, dans l'espace 410 situé au-delà du mur 402, ou
- une surface réfléchissante, tel qu'un miroir, auquel cas la caméra 304 peut capter au niveau de la surface réfléchissante la silhouette 404 d'une personne située hors du champ de vision de la caméra 304, par exemple dans l'espace 412 situé derrière la caméra 304.

Dans l'exemple illustré en FIGURE 4b, un motif adversarial 420 est projeté par le projecteur 302 au niveau de ladite surface perturbatrice 404.

Par conséquent, le motif adversarial 420 sera présent au niveau de la surface perturbatrice 404 dans une image captée par la caméra 304.

Ainsi, lorsque ladite image captée est analysée, le motif adversarial 420 empêche la détection d'une personne au niveau de ladite surface perturbatrice 404. La projection d'un motif adversarial 420 permet ainsi de réduire les faux-positifs éventuellement causés par la surface perturbatrice 404, lors de l'analyse d'image captée au sein du lieu 400.

Dans l'exemple illustré en FIGURE 4b, le motif adversarial 420 projeté est de forme carrée et recouvre uniquement une partie centrale de la surface perturbatrice 404. La taille et le positionnement du motif adversarial 420 peut bien évidemment être différent, par exemple il est possible selon une variante de réalisation que le motif adversarial recouvre intégralement la surface perturbatrice sur laquelle il est projeté.

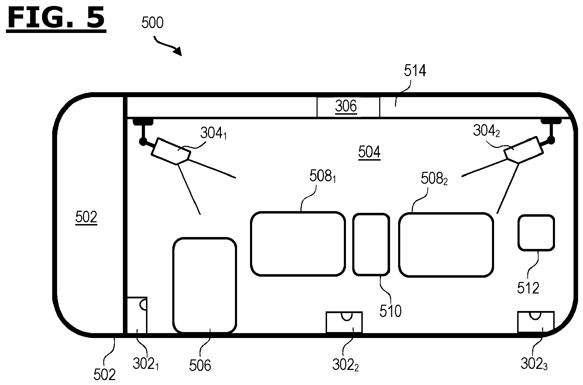

La FIGURE 5 est une représentation schématique d'un exemple de réalisation non limitatif d'un véhicule selon l'invention équipé d'un système selon l'invention.

Le véhicule de transport en commun 500 illustré très schématiquement en FIGURE 5 est un véhicule ferroviaire, ou un véhicule de route.

Le véhicule 500 comprend une zone, dite zone conducteur 502, réservée au conducteur et une zone, dite zone passager 504, dans laquelle les passagers sont libres de circuler.

Dans l'exemple illustré la zone passager 504 comprend une pluralité de surfaces perturbatrices sous la forme :
- d'une porte vitrée 506,
- de deux fenêtres 508₁ et 508₂,
- d'une surface publicitaire 510, et
- d'un miroir 512.

Le véhicule 500 est en outre équipé d'un système de détection selon l'invention comprenant :
- trois projecteurs 302₁, 302₂ et 302₃ pour projeter, chacun, au moins un motif adversarial sur au moins une surface perturbatrice, lesdits projecteurs 302₁, 302₂ et 302₃ sont disposés en partie basse de ladite zone passager 504, le premier projecteur 302₁ étant situé au niveau d'un première extrémité de la zone passager 504, le deuxième projecteur 302₂ étant situé au niveau du centre de la zone passager 504 et que le troisième projecteur 302₃ étant situé au niveau d'une deuxième extrémité de la zone passager 504,
- deux caméras 304₁ et 304₂ pour capter au moins une image au sein de la zone passager 504, chacune disposée à une différente extrémité de la zone passager 504 et fixée à un plafond 514 de ladite zone passager 504, et prévue, et
- une unité d'analyse 306 disposée dans le plafond 514 de ladite zone passager 504 et prévue pour analyser au moins une image captée par lesdites caméras 304₁ et 304₂ pour déterminer la présence ou non d'une personne dans ladite image.

Ainsi, la partie de l'habitacle du véhicule 500 correspondant à la zone passager 504 est le lieu pour lequel une détection de personne est possible.

Dans l'exemple illustré en FIGURE 5, la zone passager 504 comprend un plus grand nombre de surfaces perturbatrices que de 302₁, 302₂ et 302₃. Ainsi, au moins un projecteur est prévu pour projeter au moins un motif adversarial sur au moins deux différentes zones perturbatrices. Par exemple, le deuxième projecteur 302₂ peut être prévu pour projeter au moins un motif adversarial sur au moins la première fenêtre 508₁ et sur la surface publicitaire 510.

Bien entendu, l'invention n'est pas limitée aux exemples détaillés cidessus.

## Revendications

1. Procédé (100;200) de détection de personne dans un lieu (400;504) comprenant au moins une surface (404;506,508₁,508₂,510,512), dite perturbatrice, susceptible de fausser ladite détection et de causer un faux-positif lors de ladite détection, ledit procédé (100;200) comprenant au moins une itération d'une phase (102), dite de détection, comprenant les étapes suivantes :
- captation (106) d'au moins une image au sein dudit lieu (400;504) par au moins une caméra (304),
- pour au moins une image captée, analyse (108) de ladite image pour déterminer la présence ou non d'une personne dans ladite image ;
**caractérisé en ce que** ladite phase de détection (102) comprend en outre, préalablement à l'étape de captation (106), une étape de projection (104), par au moins un projecteur (302), sur au moins une desdites surfaces perturbatrices (404;506,508₁,508₂,510,512), d'un motif adversarial (420) empêchant la détection d'une personne au niveau de ladite surface perturbatrice (404;506,508₁,508₂,510,512).

2. Procédé (100;200) selon la revendication précédente, **caractérisé en ce que** l'étape de projection (104) d'un motif adversarial (420) sur une surface perturbatrice (404;506,508₁,508₂,510,512) est réalisée en fonction d'au moins une donnée d'état relative audit lieu (400;504).

3. Procédé (100;200) selon la revendication précédente, **caractérisé en ce que**, lorsque le lieu est un habitacle ou une zone passager (504) d'un véhicule (500), au moins une donnée d'état, comprend :
- une position géographique dudit véhicule (500), et/ou
- un état ouvert ou fermé d'un ouvrant dudit habitacle ou de ladite zone passager (504).

4. Procédé (200) selon l'une quelconque des revendications précédentes, **caractérisé en ce qu'**il comprend en outre une phase (202), dite de calibration, préalablement à la première itération de la phase de détection (102), pour identifier au moins une surface perturbatrice (404;506,508₁,508₂,510,512).

5. Procédé (100;200) selon l'une quelconque des revendications précédentes, **caractérisé en ce que** l'étape d'analyse (108) d'au moins une image captée est mise en œuvre par un réseau neuronal préalablement entrainé pour la détection de personne, en particulier à l'aide d'images captées dans ledit lieu (400;504).

6. Procédé (100;200) selon l'une quelconque des revendications précédentes, **caractérisé en ce qu'**au moins une image captée est une image dans le spectre visible.

7. Procédé (100;200) selon l'une quelconque des revendications précédentes, **caractérisé en ce qu'**au moins une image captée est une image dans le spectre non visible, en particulier dans le spectre infrarouge ou dans le spectre de l'ultraviolet.

8. Procédé (100;200) selon l'une quelconque des revendications précédentes, **caractérisé en ce qu'**au moins un motif adversarial (420) projeté sur une surface perturbatrice (404;506,508₁,508₂,510,512) est un motif dans le spectre visible, et **en ce que** l'image captée comprenant ladite surface perturbatrice (404;506,508₁,508₂,510,512) est une image du spectre du visible.

9. Procédé (100;200) l'une quelconque des revendications précédentes, **caractérisé en ce qu'**au moins un motif adversarial (420) projeté sur une surface perturbatrice (404;506,508₁,508₂,510,512) est un motif dans le spectre du non visible, et **en ce que** l'image captée comprenant ladite surface perturbatrice (404;506,508₁,508₂,510,512) est une image du spectre du non visible.

10. Procédé (100;200) selon l'une quelconque des revendications précédentes, **caractérisé en ce qu'**au moins un motif adversarial (420) projeté sur une surface perturbatrice (404;506,508₁,508₂,510,512) recouvre uniquement une partie de ladite surface perturbatrice (404;506,508₁,508₂,510,512), et en particulier une zone centrale de ladite surface perturbatrice (404;506,508₁,508₂,510,512).

11. Système (300) de détection de personne dans un lieu (400;504) comprenant au moins une surface (404;506,508₁,508₂,510,512), dite perturbatrice, susceptible de fausser ladite détection et de causer un faux-positif lors de ladite détection, ledit système (300) comprenant :
- au moins une caméra (304) pour capter au moins une image au sein dudit lieu (400;504) ;
- au moins une unité d'analyse (306) pour analyser au moins une image captée par ladite caméra (304) pour déterminer la présence ou non d'une personne dans ladite image ;
**caractérisé en ce qu'**il comprend en outre au moins un projecteur (302) prévu pour projeter, sur au moins une desdites surfaces perturbatrices (404;506,508₁,508₂,510,512), un motif adversarial (420) empêchant la détection d'une personne au niveau de ladite surface perturbatrice (404;506,508₁,508₂,510,512).

12. Système (300) selon la revendication précédente, **caractérisé en ce que** le système (300) est calibré de sorte à identifier au moins une surface perturbatrice (404;506,508₁,508₂,510,512).

13. Système (300) selon l'une quelconque des revendications 11 ou 12, **caractérisé en ce que** au moins une unité d'analyse (306) comprend un réseau neuronal préalablement entrainé pour la détection de personnes, en particulier dans ledit lieu (400;504).

14. Véhicule (500) de transport en commun, en particulier véhicule ferroviaire, équipé d'un système (300) selon l'une quelconque des revendications 11 à 13, pour la détection de personne dans une zone passager ou un habitacle dudit véhicule.

15. Véhicule (500) selon la revendication précédente, **caractérisé en ce qu'**il est :
- un wagon, équipé d'un système selon l'une quelconque des revendications 11 à 13 pour la détection de personne à l'intérieur dudit le wagon,
- une locomotive, équipé d'un système selon l'une quelconque des revendications 11 à 13 pour la détection de personne à l'intérieur d'une zone conducteur,
- un train, ou
- un tramway.
